# EUROPEAN PATENT SPECIFICATION

(11) **EP 3 815 809 B1**
(45) Date of publication and mention of the grant of the patent: **28.12.2022**
(21) Application number: 19290112.2
(22) Date of filing: 04.11.2019
(51) Int. Cl.: B21H 3/08, B21J 15/04, B21K 1/60, B21J 1/06, F16B 19/10, F16B 37/06, B21J 1/02, B21K 1/70, B23P 15/00, C22C 21/06

(54) **BLIND RIVET NUT AND MANUFACTURING METHOD THEREFOR**
BLINDNIETMUTTER UND HERSTELLUNGSVERFAHREN DAFÜR
ECROU A SERTIR AVEUGLE ET SON PROCEDE DE FABRICATION

(43) Date of publication of application: 05.05.2021
(73) Proprietor: Bollhoff Otalu S.A., 73490 La Ravoire (FR)
(72) Inventor: SULLY, Marlène, 73250 Freterive (FR); BERLIRE, Emmanuelle, 73190 Challes-les-Eaux (FR); BASSET, Raphael, 73000 Sonnaz (FR); CASSOT, Jean-Michel, 73190 Challes-les-Eaux (FR); LAMBERT, Laurent, 73190 Saint Baldoph (FR)
(74) Representative: HWP Intellectual Property

(56) References cited:
- EP-A1- 3 556 875
- WO-A1-2018/193937
- US-A1- 2015 377 272
- US-A1- 2018 238 374

## Description

### 1. Field of the invention

The present invention relates to a blind rivet nut, a manufacturing method making the same as well as a combination of at least one component having an opening and a blind rivet nut fastened in said opening by crimping wherein the blind rivet nut is made of an aluminum alloy of AlMg₅.

### 2. Background of the invention

The crimping nut is an assembly accessory being blindly mounted in holes of a component or a support. To blindly mount a blind rivet nut means that it is fastened in an opening from one side of this component without having access to the opposite side of the component. Such blind rivet nuts are known in the art as described in EP 1 462 208 B1.

A blind rivet nut has a hollow shaft including a retaining head at one axial end of the shaft. The head is exemplarily formed as a collar extending circumferentially around the shaft.

A section of the shaft forms a crimp section. It is intended to be folded into a bulged configuration during crimping. At the end of the crimping process, this bulged configuration or crimping bead and the head of the crimping nut retain there between an edge of the component opening. Thereby, the axial attachment of the blind rivet nut is assured.

A further section of the shaft carries an inner thread in which a threaded bolt or the like can be fastened during assembly. Generally, crimping nuts are manufactured by cold forging of a blank made of steel or an aluminum alloy. For some applications, crimping nuts made of aluminum material are necessary to avoid galvanic corrosion with the substrate or component.

US 6,056,835 discloses a process for producing a superplastic aluminum alloy. The basic aluminum alloy contains from at least 4.0 to 15% by weight of Mg and from 0.1 to 1.0% by weight of one or more elements selected from the group consisting of Mm, Zr, V, W, Ti, Ni, Nb, Ca, Co, Mo and Ta, and further selective elements of Sc, Cu. Li, Sn, In and Cd, which contains from 0.1 to 4.0% by volume fraction of spheroidal precipitates of intermetallic compounds having a particle size from 10 to 200 nm, and which has a mean grain size from 0.1 to 10 µm. The superplastic aluminum alloy is to be used for extruding, forging and rolling. Even if several material production routes are given, they do not focus on blind rivet nuts and the inner stress conditions to be met.

EP 2 361 319 B1 discloses a continuously cast Al-Mg alloy sheet or plate product comprising 6 - 10 wt. % Mg, wherein the Al-Mg alloy product is resistant to both (i) stress corrosion cracking and (ii) inter-granular corrosion, and the Al-Mg alloy comprises a plurality of grains, wherein the grains have grain boundaries, and wherein the Al-Mg alloy is free of a continuous film of β-phase at the grain boundaries after the Al-Mg alloy has been age sensitized.

Already above mentioned EP 1 462 208 B1 describes a method of manufacturing a blind rivet nut. It includes forming a blank by first cold striking a steel blank, annealing heat treatment of the blank, and then boring with a second cold coining. The tapping operation is performed after the second cold stamping. This double-cold manufacturing process is complex and expensive because it requires two stages of cold forging with an intermediate heat treatment. Furthermore, the blind rivet nut is made of steel, stainless steel, aluminum or brass.

British Patent Application GB 2 368 889 proposes two methods for the manufacture of crimping nuts. These methods relate to the implementation of a steel insert, with specific shades and localized heat treatment processes. In one of these two methods, an insert is partially cold forged from a low carbon steel (having 0.1% carbon), after which only a portion of the insert is localized annealing. Thereafter, an internal thread is formed. The localized annealing step is however an expensive and complex step to be implemented due to the extensive specific equipment.

GB 2 368 889 further relates to a partially cold-forged insert from a medium carbon steel, having between 0.3 and 0.35% carbon. The cold forging step is followed by annealing of the entire insert and then a tapping, finally hardened by a last step of localized induction hardening (quenching) in order to improve the mechanical strength of the nut. Based on the material specific manufacturing route, the disclosed method steps cannot be copied to a manufacturing route using other materials.

One can also note the publication FR 1 751 319 which relates to the producing of a blind rivet insert from carbon steel implemented by cold forging or partially heated. The entire part undergoes a moderate annealing allowing the malleability of the crimping zone (deformable), followed by a tapping by discharge (without chips) to increase the stiffness of the tapped zone.

EP 3 556 875 A1 discloses a blind rivet nut and forms the basis for the preamble of claim 1.

An object of the invention is to overcome the aforementioned drawbacks, and more particularly to provide an aluminum alloy blind rivet nut which has improved mechanical strength. Another object of the invention is to provide a simple method of manufacturing such a blind rivet nut.

### 3. Summary of the invention

The above problem is solved by a blind rivet nut according to independent claim 1, a combination of at least one component and the above blind rivet nut as well as by a manufacturing method of said crimping nut according to independent claim 6. Preferred embodiments as well as additional modifications and developments of the invention are derivable from the following description, the accompanying drawings and the appending claims.

The inventive blind rivet nut is made of an aluminum alloy of AlMg₅ which comprises a Magnesium mass percentage w_{Mg} in the range of 4.5 %m/m≤w_{Mg}≤5.6 %m/m. The material of the blind rivet nut further comprises at least one component selected from the following group of manganese (Mn), chromium (Cr), zinc (Zn), copper (Cu), iron (Fe), titanium (Ti), silicon (Si), wherein the blind rivet nut has a head forming a first axial end, a subsequent crimp section of a shaft deformable into a crimping bead and a thread section of the shaft providing a radial inner thread.

The inventive blind rivet nut is made of an aluminum wrought alloy in class 5000. Class 5000 covers various aluminum-magnesium-alloys. Due to the preferred material composition having a Magnesium mass percentage w_{Mg} in the range of 4.5 %m/m≤w_{Mg}≤5.6 %m/m, the preferred blind rivet nut has the required hardness and stability in a combination with a component. However, various results of the developments revealed that the full range of aluminum alloys in class 5000 would not provide the mechanical properties supporting a blind rivet nut construction. A minimum rate of magnesium is 4.5%m/m in order to preferably achieve a minimum of hardness in the structural area of the thread section. A maximum rate of magnesium of 5.6%m/m is the upper limit to preferably avoid inter-granular corrosion between the two crystalline structures of Aluminum and Magnesium.

According to the present blind rivet nut of the invention and if the blind rivet nut is provided in a cut along its longitudinal axis in an uncrimped condition, the head and the crimp section have a longitudinal cut surface, respectively, and a material of the longitudinal cut surface of the head and of the crimp section of the shaft, respectively, has a Vickers hardness Hv in the range of 65 HV 0.1≤Hᵥ≤85 HV 0.1, preferably 70 HV 0.1≤Hᵥ≤80 HV 0.1. In order to verify the material properties of the different sections of the blind rivet nut, the blind rivet nut is preferably cut along its longitudinal middle axis. Accordingly, the longitudinal cut extends from the first axial end to the second axial end of the blind rivet nut. Thereby, several longitudinal cut surfaces are made which belong to all different sections of the blind rivet nut, respectively. These longitudinal cut surfaces, if preferably polished or having a certain surface finishing, are qualified for measuring the Vickers hardness according to known principles. The measurement of the Vickers hardness is defined in ISO 6507-1 and ASTM E384 standards. The above given values refer to the ISO 6507 standard.

According to a preferred embodiment of the present blind rivet nut and if the blind rivet nut is provided in a cut along its longitudinal axis in an uncrimped condition, the thread section has a longitudinal cut surface and a material of the longitudinal cut surface of the thread section of the shaft has a Vickers hardness Hv in the range of 65 HV 0.1≤Hᵥ≤110 HV 0.1, preferably 70 HV 0.1≤Hᵥ≤100 HV 0.1.

With respect to the above given conditions, it is furthermore emphasized to evaluate the material conditions of the blind rivet nut in an uncrimped state. Accordingly, the blind rivet nut was not yet set or fastened in a component opening. Thereby, additional mechanical stresses within the material are to be prevented in order to prevent any material property changes after manufacture.

According to a further preferred embodiment of the present blind rivet nut, the material of the longitudinal cut surface of the crimp section and/or the thread section has a grain size distribution K in the range of 2 µm≤K≤12 µm, preferably 3 µm≤K≤10 µm.

The present invention further comprises a combination of at least one component having an opening and a blind rivet nut according to one of the above described embodiments, which is fastened within the opening by crimping.

The present invention further discloses a manufacturing method of the blind rivet nut according to the invention and comprising the steps of: a) providing a wire slug made of an aluminum alloy of AlMg₅ which comprises a Magnesium mass percentage w_{Mg} in the range of 4.5 %m/m≤w_{Mg}≤5.6 %m/m, and which further comprises at least one component selected from the following group of manganese (MN), chromium (Cr), zinc (Zn), copper (Cu), iron (Fe), titanium (Ti), silicon (Si), b) cold forging the body to form a blank having a head, a subsequent crimping section for deforming into a crimping bead and a shaft, c) cold forming of an internal thread as a connection section being part of the shaft, and d) applying a heat treatment on the blank subsequent to, preferably after completion of, the cold forging of the body and before the cold forming of the internal thread.

The present invention provides a preferred route of making a blind rivet nut, which is divided in a cold forging part, an annealing or tempering part and a thread forming part. In contrast to former manufacturing methods, the cold forming part of the manufacturing method is first completed before applying any thermal treatment. Based on the combination of several cold forging steps, the manufacturing method runs more efficiently and time effective. Consequently, a tool handling and a tool combination is preferably realized which is not interrupted by any thermal treatment often being time consuming.

According to a preferred embodiment of the inventive manufacturing method, the heat treatment comprises heating the blank up to a temperature T in the range of 330 °C≤T≤420 °C. According to a further preferred embodiment of the inventive manufacturing method, the heating of the blank is performed at a constant temperature T. According to an additionally preferred embodiment of the inventive manufacturing method, the heating of the blank is performed for a period t in the range of 10 min≤t≤3 h.

Preferably, the inventive manufacturing method applies the annealing step by means of the defined heat treatment. The annealing results in certain material properties, e.g. the crimp section remains sufficiently malleable or ductile to be able to bend in the crimping configuration, without requiring the use of excessive forces. Furthermore, the crimping bead does preferably not show any inacceptable defects, such as cracks or the like. After applying the heat treatment, preferably at a constant temperature, the blank cooled down to room temperature.

### 4. Short description of the accompanying drawings

In the following, the present invention will be described in detail based on the drawings. In the drawings, the same reference signs denote the same elements and/or components. Certain advantages and features will emerge more clearly from the following description of preferred embodiments and implementations of the invention. The preferred embodiments are given as non-restrictive examples.

It shows:
FIG. 1 is a mixed view, for a half left in section and for a half right in perspective, of an embodiment of a blind rivet nut according to the invention,
FIG. 2 is a mixed view of the blind rivet nut illustrated in FIG. 1 after having been crimped in a hole of a component or a support plate,
FIG. 3 schematically illustrates the main steps of a preferred embodiment of a manufacturing method of the blind rivet nut according to the invention,
FIG. 4 is a side view of a preferred aluminum alloy body made of an aluminum alloy of ALMgs which comprises a Magnesium mass percentage w_{Mg} in the range of 4.5 %m/m≤w_{Mg}≤5.6 %m/m intended to be cold forged,
FIG. 5 is a mixed view of a preferred embodiment of a blank made of the aluminum alloy body according to Fig. 4, and
FIG. 6 is a sectional view of a preferred embodiment of a blind rivet nut after having been crimped in a hole of a component and connected with a further component by means of a threaded bolt.

### 5. Detailed description of preferred embodiments

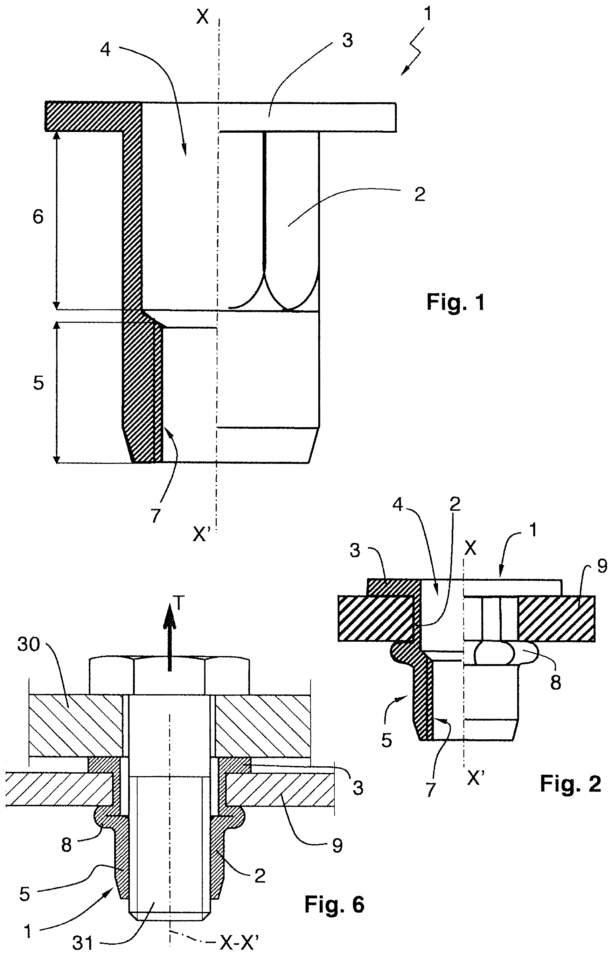

Figure 1 illustrates a blind rivet nut 1 according to a preferred embodiments of the present invention. It is made of a single piece of an aluminum alloy of AlMg₅ comprising a Magnesium mass percentage w_{Mg} in the range of 4.5 %m/m≤w_{Mg}≤5.6 %m/m. Furthermore, the aluminum alloy of AlMg₅ comprises preferably at least one component selected from the following group of manganese (MN), chromium (Cr), zinc (Zn), copper (Cu), iron (Fe), titanium (Ti), silicon (Si) to adapt material properties to the respective practical application of the blind rivet nut 1. Preferably, the inventive blind rivet nut 1 can be mounted blind.

The crimping nut 1 has a hollow shaft 2. At a first axial end thereof, the shaft 2 comprises a retaining head 3 which also denoted as a surrounding collar or an outer rim.

The shaft 2 and the retaining head 3 are coaxially arranged with respect to the longitudinal middle axis X-X' of the blind rivet nut 1. According to Fig. 1, an axial hole extends through the shaft 2. It is realized as a through hole or alternatively as a blind hole (not shown).

The shaft 2 preferably includes a crimp section 6 and a thread section 5. The crimp section 6 is crimped or folded in axial direction based on a crimping action. During such a crimping action, the thread section 5 is pulled in the direction of the retaining head 3 while it is supported on a component 9 (see Fig. 2). To this end, the blind rivet nut 1 is inserted into a component opening until the retaining head 3 abuts the component's surface.

While the thread section 5 is pulled to the retaining head 3, the crimp section 6 is folded and forms a crimping bead 8 (see Fig. 2 and 6). Finally, the component 9 is retained or clamped between the retaining head 3 and the crimping bead 8 (see Figs. 2 and 6).

In order to achieve a reliable folding of the crimp section 6 into the crimping bead 8, a wall thickness of the thread section is preferably larger than a wall thickness of the crimp section 6.

At the inner radial wall of the thread section 5, an inner thread 7 is provided. The inner thread 7 is preferably adapted to a screw bolt 31 or any other threaded fastener in order to realize a connection between the two components 9, 30 via the screw bolt 31 and the blind rivet nut 1. To this end, the component 31 also has a component opening through which the screw bolt 31 extends.

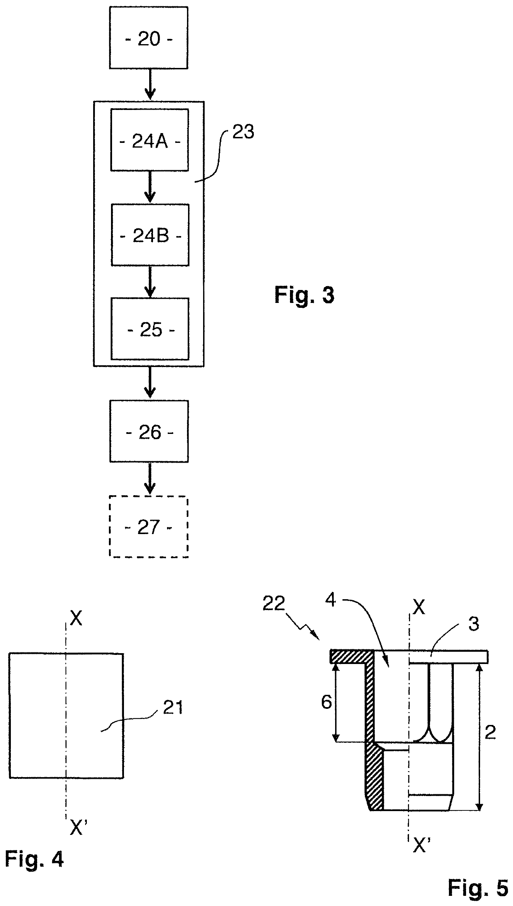

A preferred embodiment of the manufacturing method is illustrated by the flow chart of Fig. 3. The manufacturing method starts with a metal casting or a wire slug 21 (see Fig. 4). The wire slug is made of an aluminum alloy of AlMg₅ comprising a Magnesium mass percentage w_{Mg} in the range of 4.5 %m/m≤w_{Mg}≤5.6 %m/m. The aluminum alloy belongs to the series 5000 of aluminum alloys, also denoted as 5XXX series, including e.g. the aluminum alloys 5000, 5019, 5119 or 5056. Furthermore, the aluminum alloy preferably comprises at least one component selected from the following group of manganese (MN), chromium (Cr), zinc (Zn), copper (Cu), iron (Fe), titanium (Ti), silicon (Si). The wire slug 21 is thus made of a cold forgeable aluminum alloy of AlMg₅.

The mass percentage of a component as given above is equal to one hundred times the mass fraction of the component. Further, the mass fraction of a component is equal to the ratio of the mass of the component to the total mass of the slug 21.

Furthermore, aluminum alloys of the grades 5019, 5119, 5056, and 5356 form preferred material choices of the invention. Additionally, further material choices are qualified by a mass percentage w_{Mg} of Magnesium of 4.5 %w/w≤w_{Mg}≤5.6 %w/w.

Referring to Fig. 3, in a cold forging process 20, the wire slug 21 is formed into a blank 22 (see Fig. 5). To this end, the wire slug 21 is preferably deformed in several successive steps by cold heading on a cold heading machine so as to form the recess zone 4. Cold heading (or cold forming) is a method of forming metal in progressive steps into net shaped or near net shaped parts. Starting with a wire slug, which is cut from a continuous coil of wire material; the cold heading machine uses a series of powerful hammers and dies to form a part. Upsets and extrusions are two basic types of techniques used in cold headed manufacturing. These techniques involve the controlled forming of the wire slug by applying enough force for the material to fill a voided space within a die. Each die is engineered accordingly, to produce the proper amount of material movement throughout the progression.

According to one preferred embodiment, in the course of the cold heading operation, a stamping step then an extrusion step enable a rough part 2 to be achieved comprising, in the upper part thereof, a cavity 4 opening out onto the top end of the wire slug 21. By deforming the wire slug 21, an outwardly peripheral rim 3 is formed at the top end of the wire slug 21. This peripheral rim 3 is then calibrated to form the head 3 of the blind rivet nut 1. In FIG. 5, the head 3 of the blind rivet nut 1 is formed during the cold heading operation designed to form the recess zone 6. The shape of the head 3 can be flat, fine, milled, reduced or any other shape.

Further, the cold heading machine forms by cold heading the axial through bore adjacent to the recess zone 6 and extending the cavity 4 coaxially in the bottom part of the blank 22. This has the effect of hardening the bore 4 locally by cold working effect. The bore 4 and recess zone 6 form the shank or the shaft 2 of the blind rivet nut 1. The bore 4 is preferably achieved by extrusion.

Cold forging results in work hardening of the blank 22 which, combined with the intrinsic properties of the latter, gives it high strength and toughness.

The work hardening of the blank 22 affects certain mechanical properties of aluminum, especially those which must allow the foldable section 6 to be folded correctly in the bead configuration 8, without showing unacceptable defects such as cracks.

The folding property is at least partially restored by means of a heat treatment 23, also called annealing, which follows the cold forging 20. Preferably, the annealing 23 is applied to the whole of the blank 22 so that the process be simplified and more economical. In addition, the annealing 23 reduces the hardness of the blank 22 to obtain a foldable section 6 which can be deformed. The annealing 23 of the blank 22 does not require specific equipment and may, on the contrary, be carried out by means of a conventional oven. Furthermore, the anomaly 23 is preferably started after completion of the cold forging step.

Annealing 23 is more precisely a re-crystallization annealing by which the cold-forged and cold-worked structure 20 is replaced by a new reformed grain structure.

The re-crystallization annealing 23 carried out on the blank 22 reduces certain performances such as the tensile strength and the hardness, but makes it possible to re-homogenize the structure of the blank 22 and to give it an increase in the coefficient of elongation necessary for the final function of the foldable section 6.

In a particular embodiment, the annealing 23 is carried out by means of an oven which has previously been brought to an annealing temperature. The blank 22 is placed in this oven already at the annealing temperature. Following this, there is a heating 24A of the blank 22. This blank 22 is left in the oven at a temperature maintained substantially constant 24B, namely at the annealing temperature.

The annealing temperature T is preferably in the range of 330 °C≤T≤420 °C. More particularly, the annealing temperature T is preferably kept constant (Step 24B) for a preferred period of 10 min≤T≤3 h. The maintenance 24B of the blank 22 at the annealing temperature terminates substantially instantaneously, if an outlet let this blank 22 out of the oven.

This outlet of the furnace is preferably followed by a slow cooling of the blank 22 in the open air and at an ambient temperature, lower than the annealing temperature. The annealing temperature and the duration of the maintenance 24B at this annealing temperature are to be adjusted according to the aluminum alloy of AlMg₅ used.

The annealing 23 is followed by a tapping or cold forming operation 26 by means of which the inner thread 7 of the shaft is formed (see FIG. 3).

Advantageously, the tapping operation 26 is a creep tapping without removal of material, i.e. without cutting an inner thread. It is also called tapping by three-dimensional deformation of the nut material, in which the thread 7 is formed. Thereby, the aluminum flows locally, at an internal surface of the association section 5, and there is thus a work hardening producing a hardening of the material at the thread 7. Preferably, a higher strength of the material and better geometric qualities are achieved in the inner thread section 7 as compared to an inner thread produced by a cutting procedure.

Alternatively, the thread 7 can be made by removal of material, e.g. a thread cutting process.

The crimping nut 1 obtained by means of cold forging 20, annealing 23 and tapping operation 26 is preferably compatible with an optional surface treatment 27. This surface treatment 27 may be an electrolytic deposit or a projection of an anticorrosive coating, as well as immersion in any bath of finishing product. The surface treatment 27 may provide the crimping nut 1 with a coating of electrical insulation, or with an electrical conductive coating, or even with a coating of aesthetic appearance. The coating provided by the surface treatment 27 may also be a sealing coating such as a brake coating of a screw in the tapping 7.

The mechanical capacity of the crimping nut 1 obtained by the method defined above is improved in terms of the applicable maximum load to be applied by means of a fastener. In addition, the foldable section 6 of the blind rivet nut 1 obtained is sufficiently malleable to be able to form the crimping bead 8, after having been compressed axially. This foldable section 6 folds without this requiring the use of excessive effort and without appearing unacceptable defects such as cracks.

Axial tensile tests were carried out on a head of the screw 31 in the direction of the arrow T, while the other elements shown in Figure 6 were retained in the opposite direction. These tests have shown that the thread of the screw 31 screwed into the thread section 5 has a superior tear resistance at 15,000 N in the case of a screw diameter of 6 mm and greater than 27,000 N in the case of a screw diameter of 8 mm. Accordingly, an increase of 25% in the tensile resistances is achieved as compared to an aluminum blind rivet nut and their conventional methods of implementation.

Also, it has been found that the head 3 of the blind rivet nut 1 has the advantage of having improved resistance to matting, that is to say the accidental discharge of material due to repeated shocks.

The preferred blind rivet nut 1 according to the invention further has a particular crystalline microstructure which is based on the annealing steps as described above. The annealing of the preferred manufacturing method of the present invention preferably results in a re-crystallization annealing of the entire blind rivet nut 1. Thus, the annealing and, therefore, the re-crystallization is not restricted to certain sections or locations of the blind rivet nut 1, as for example to the crimp section 6. Based on the preferred annealing and re-crystallization throughout the complete blind rivet nut 1, the material of the blind rivet nut 1, preferably the material of the longitudinal cut surfaces selected from the following group including the crimp section 6, the head 3 and the thread section 5, has a preferred grain size distribution K in the range of 2 µm≤K≤12 µm, preferably 3 µm≤K≤10 µm.

According to the above preferred manufacturing route of the present invention, the blind rivet nut 1 is additionally qualified by certain Vickers hardness values measured based on the ISO 6507-1 standard or the ASTM E92 Standard Test Methods for Vickers Hardness and Knoop Hardness of Metallic Materials. To this end, the preferred blind rivet nut 1 is evaluated in an uncrimped condition. To facilitate the hardness measurement based on the known Vickers hardness tests, the blind rivet nut 1 is preferably cut along its longitudinal middle axis X-X'. Based thereon, longitudinal cut surfaces are generated in the head 3, the crimp section 6 and in the thread section 5 as indicated by the shaded areas on the left hand side of Fig. 1.

At least one of these cut surfaces have a preferred surface finishing produced by grinding and/or lapping of the cut surface. The surface finishing supports a reliable evaluation of the Vickers hardness tests.0,5 °

In an uncrimped condition, the blind rivet nut 1 of the ivention has on the longitudinal cut surfaces of the head 3 and/or the crimp section 6 a Vickers hardness Hv in the range of 65 HV 0.1≤Hᵥ≤85 HV 0.1, preferably 70 HV 0.1≤Hᵥ≤80 HV 0.1. Furthermore preferred, the material of the longitudinal cut surface of the thread section 5 has a preferred Vickers hardness Hv in the range of 65 HV 0.1≤Hᵥ≤110 HV 0.1, preferably 70 HV 0.1≤Hᵥ≤100 HV 0.1. In this test procedure, a Vickers indenter is used being a highly polished, pointed, square-based pyramidal diamond with face angles of 136 °±0,5 °. The four faces are equally inclined and meet at a sharp point.

### List of reference signs

- 1: blind rivet nut
- 2: shaft, shank
- 3: head
- 4: cavity
- 5: thread section
- 6: crimp section
- 7: thread
- 8: crimping bead
- 9: component
- 21: wire slug
- 22: blank
- 30: component
- 31: screw bolt
- X-X': longitudinal middle axis
- step 20: cold forging
- step 24A: heating of the blank 22
- step 24B: annealing of the blank 22 at constant temperature after completion of the cold forging process
- step 26: thread forming or tapping after cold forging and annealing
- step 27: surface treatment of the blind rivet nut after cold forging, annealing and tapping

## Claims

1. A blind rivet nut (1) made of an aluminum alloy of AlMg₅ comprising a Magnesium mass percentage w_{Mg} in the range of 4.5 %m/m≤w_{Mg}≤5.6 %m/m, and which preferably comprises at least one component selected from the following group of manganese (MN), chromium (Cr), zinc (Zn), copper (Cu), iron (Fe), titanium (Ti), wherein the blind rivet nut (1) has a head (3) forming a first axial end, a subsequent crimp section (6) of a shaft (2) deformable into a crimping bead (8) and a thread section (5) of the shaft (2) providing a radial inner thread (7),
**characterized in that**, if the blind rivet nut (1) is provided in a cut along its longitudinal axis (X-X') in an uncrimped condition, the head (3) and the crimp section (6) have a longitudinal cut surface, respectively, and a material of the longitudinal cut surface of the head (3) and of the crimp section (6) of the shaft (2), respectively, has a Vickers hardness Hᵥ in the range of 65 HV 0.1≤Hᵥ≤85 HV 0.1.

2. The blind rivet nut (1) according to claim 1, wherein the material of the longitudinal cut surface of the head (3) and of the crimp section (6) of the shaft (2), respectively, has a Vickers hardness Hᵥ in the range of 70 HV 0.1≤Hᵥ≤80 HV 0.1.

3. The blind rivet nut (1) according to claim 1 or 2, wherein, if the blind rivet nut (1) is provided in a cut along its longitudinal axis (X-X') in an uncrimped condition, the thread section (5) has a longitudinal cut surface and a material of the longitudinal cut surface of the thread section (5) of the shaft (2) has a Vickers hardness Hᵥ in the range of 65 HV 0.1≤Hᵥ≤110 HV 0.1, preferably 70 HV 0.1≤Hᵥ≤100 HV 0.1.

4. The blind rivet nut according to claim 2 or 3, wherein the material of the longitudinal cut surface of the crimp section (6) and/or the thread section (5) has a grain size distribution K in the range of 2 µm≤K≤12 µm, preferably 3 µm≤K≤10 µm.

5. A combination of at least one component (9) having an opening and a blind rivet nut (1) according to one of the preceding claims, which is fastened within the opening by crimping.

6. A manufacturing method of a blind rivet nut (1) according to one of the preceding claims, comprising the steps of:
a. providing (S1) a wire slug (21) made of an aluminum alloy of AlMg₅ comprising a Magnesium mass percentage w_{Mg} in the range of 4.5 %m/m≤w_{Mg}≤5.6 %m/m, and which further comprises at least one component selected from the following group of manganese (MN), chromium (Cr), zinc (Zn), copper (Cu), iron (Fe), titanium (Ti),
b. cold forging (S2) the wire slug to form a blank (22) having a head (3), a subsequent crimping section (6) for deforming into a crimping bead (8) and a shaft (2),
c. cold forming of an internal thread (7) as a connection section (5) being part of the shaft (2) (S4)
d. applying a heat treatment (S3) on the blank (22) subsequent to the cold forging of the body and before the cold forming of the internal thread (7).

7. The manufacturing method of claim 6, in which the heat treatment (S3) comprises heating the blank (22) up to a temperature T in the range of 350 °C≤T≤380 °C.

8. The manufacturing method of claim 7, wherein the heating of the blank (22) is performed at a constant temperature T.

9. The manufacturing method of claim 7 or 8, wherein the heating of the blank (22) is performed for a period t in the range of 1 h≤t≤3 h.

10. The manufacturing method according to one of claims 6 to 9, wherein the cold forming step (26) comprises a creep without removal of material from an inner surface of the association section (5).

## Patentansprüche

1. Eine Blindnietmutter (1) aus einer Aluminiumlegierung aus AlMg₅, die einen Magnesium-Masseprozentsatz w_{Mg} im Bereich von 4,5 % m/m≤w_{Mg}≤5,6 % m/m aufweist, und welche bevorzugt mindestens einen Bestandteil ausgewählt aus der folgenden Gruppe aufweist: Mangan (MN), Chrom (Cr), Zink (Zn), Kupfer (Cu), Eisen (Fe), Titan (Ti), wobei die Blindnietmutter (1) einen Kopf (3) aufweist, der ein erstes axiales Ende bildet, einen anschließenden Quetschabschnitt (6) einen Schaft (2), die zu einer Quetschwulst (8) umformbar ist und einen Gewindeabschnitt (5) des Schafts (2), der ein radiales Innengewinde (7) bereitstellt,
**dadurch gekennzeichnet, dass** wenn die Blindnietmutter (1) in einem Schnitt entlang ihrer Längsachse (X-X') in einem ungequetschten Zustand bereitgestellt ist, der Kopf (3) und der Quetschabschnitt (6) jeweils eine längslaufende Schnittfläche haben, und ein Material der längslaufenden Schnittfläche des Kopfes (3) bzw. des Quetschabschnitts (6) des Schafts (2) eine Vickershärte Hv im Bereich von 65 HV 0,1≤Hᵥ≤85 HV 0,1 aufweist.

2. Die Blindnietmutter (1) gemäß Anspruch 1, wobei das Material der längslaufenden Schnittfläche des Kopfes (3) bzw. des Quetschabschnitts (6) des Schafts (2) eine Vickershärte Hv im Bereich von 70 HV 0,1≤Hᵥ≤80 HV 0,1 aufweist.

3. Die Blindnietmutter (1) gemäß Anspruch 1 oder 2, wobei dann, wenn die Blindnietmutter (1) in einem Schnitt entlang ihrer Längsachse (X-X') in einem ungequetschten Zustand bereitgestellt ist, der Gewindeabschnitt (5) eine längslaufende Schnittfläche aufweist und ein Material der längslaufenden Schnittfläche des Gewindeabschnitt (5) des Schafts (2) eine Vickershärte Hv im Bereich von 65 HV 0,1≤Hᵥ≤110 HV 0,1 aufweist, vorzugsweise 70 HV 0,1≤Hᵥ≤100 HV 0,1.

4. Die Blindnietmutter gemäß Anspruch 2 oder 3, wobei das Material der längslaufenden Schnittfläche des Quetschabschnitts (6) und/oder der Gewindeabschnitt (5) eine Korngrößenverteilung K im Bereich von 2 µm≤K≤12µm aufweist, vorzugsweise 3 µm≤K≤10µm.

5. Eine Kombination aus mindestens einem Bestandteil (9) mit einer Öffnung und einer Blindnietmutter (1) gemäß einem der vorhergehenden Ansprüche, die mittels Quetschen in der Öffnung befestigt ist.

6. Ein Herstellungsverfahren einer Blindnietmutter (1) gemäß einem der vorhergehenden Ansprüche, umfassend die Schritte:
a. Bereitstellen (S1) eines Metallstücks (21) aus einer Aluminiumlegierung aus AlMg₅, die einen Magnesium-Masseprozentsatz w_{Mg} im Bereich von 4,5 % m/m≤w_{Mg}≤5,6 % m/m aufweist, und die des Weiteren mindestens einen Bestandteil ausgewählt aus der folgenden Gruppe aufweist: Mangan (MN), Chrom (Cr), Zink (Zn), Kupfer (Cu), Eisen (Fe), Titan (Ti),
b. Kaltschmieden (S2) des Metallstücks zur Bildung eines Rohlings (22) mit einem Kopf (3), einem anschließenden Quetschabschnitt (6) zum Umformen in eine Quetschwulst (8) und einen Schaft (2),
c. Kaltformen eines Innengewindes (7) zu einem Verbindungabschnitt (5), der Teil des Schafts (2) ist (S4),
d. Anwenden einer Wärmebehandlung (S3) auf den Rohling (2) im Anschluss an das Kaltschmieden des Körpers und vor dem Kaltformen des Innengewindes (7).

7. Das Herstellungsverfahren gemäß Anspruch 6, bei dem die Wärmebehandlung (S3) das Erwärmen des Rohlings (22) auf eine Temperatur T im Bereich von 350°C≤T≤380 °C umfasst.

8. Das Herstellungsverfahren gemäß Anspruch 7, wobei das Erwärmen des Rohlings (22) bei einer konstanten Temperatur T durchgeführt wird.

9. Das Herstellungsverfahren gemäß Anspruch 7 oder 8, wobei das Erwärmen des Rohlings (22) über einen Zeitraum t im Bereich von 1 h≤t≤3 h durchgeführt wird.

10. Das Herstellungsverfahren gemäß einem der Ansprüche 6 bis 9, wobei der Schritt des Kaltformens (26) ein Kriechen ohne Entfernen von Material von einer Innenfläche des zugehörigen Abschnitts (5) umfasst.

## Revendications

1. Écrou à sertir aveugle (1) constitué d'un alliage d'aluminium de AlMg₅ comprenant un pourcentage en masse de magnésium w_{Mg} dans la plage de 4,5%m/m≤w_{Mg}≤5,6%m/m, et comprenant de préférence au moins un composant sélectionné parmi le groupe suivant incluant le manganèse (MN), le chrome (Cr), le zinc (Zn), le cuivre (Cu), le fer (Fe), le titane (Ti), dans lequel l'écrou à sertir aveugle (1) comporte une tête (3) formant une première extrémité axiale, une section de sertissage (6) subséquente d'un arbre (2) déformable en un cordon de sertissage (8) et une section filetée (5) de l'arbre (2) fournissant un filetage intérieur radial (7),
**caractérisé en ce que**, si l'écrou à sertir aveugle (1) est disposé dans une coupure le long de son axe longitudinal (X-X') dans un état non serti, la tête (3) et la section de sertissage (6) présentent une surface de coupe longitudinale, respectivement, et un matériau de la surface de coupe longitudinale de la tête (3) et de la section de sertissage (6) de l'arbre (2), respectivement, présente une dureté de Vickers Hv dans la plage de 65 HV 0,1≤Hᵥ≤85 HV 0,1.

2. Écrou à sertir aveugle (1) selon la revendication 1, dans lequel le matériau de la surface de coupe longitudinale de la tête (3) et de la section de sertissage (6) de l'arbre (2), respectivement, présente une dureté de Vickers Hv dans la plage de 70 HV 0,1≤Hᵥ≤80 HV 0,1.

3. Écrou à sertir aveugle (1) selon la revendication 1 ou 2, dans lequel, si l'écrou à sertir aveugle (1) est disposé dans une coupure le long de son axe longitudinal (X-X') dans un état non serti, la section filetée (5) présente une surface de coupe longitudinale et un matériau de la surface de coupe longitudinale de la section filetée (5) de l'arbre (2) présente une dureté de Vickers Hv dans la plage de 65 HV 0,1≤Hᵥ≤110 HV 0,1, de préférence de 70 HV 0,1≤Hᵥ≤100 HV 0,1.

4. Écrou à sertir aveugle selon la revendication 2 ou 3, dans lequel le matériau de la surface de coupe longitudinale de la section de sertissage (6) et/ou de la section filetée (5) présente une distribution de taille de grain K dans la plage de 2 µm≤K≤12 µm, de préférence de 3 µm≤K≤10 µm.

5. Combinaison d'au moins un composant (9) comportant une ouverture et un écrou à sertir aveugle (1) selon l'une des revendications précédentes, lequel est fixé à l'intérieur de l'ouverture par sertissage.

6. Procédé de fabrication d'un écrou à sertir aveugle (1) selon l'une des revendications précédentes, comprenant les étapes suivantes :
a. mise à disposition (S1) d'une pastille de fil métallique (21) constitué d'un alliage d'aluminium de AlMg₅ comprenant un pourcentage en masse de magnésium w_{Mg} dans la plage de 4,5%m/m≤w_{Mg}≤5,6%m/m, et comprenant en outre au moins un composant sélectionné parmi le groupe suivant incluant le manganèse (MN), le chrome (Cr), le zinc (Zn), le cuivre (Cu), le fer (Fe), le titane (Ti),
b. forgeage à froid (S2) de la pastille de fil métallique pour la formation d'une ébauche (22) comportant une tête (3), une section de sertissage (6) subséquente destinée à être déformée en un cordon de sertissage (8) et un arbre (2),
c. formage à froid d'un filetage intérieur (7) en tant que section de raccordement (5) faisant partie de l'arbre (2) (S4),
d. application d'un traitement thermique (S3) à l'ébauche (22) après le forgeage à froid du corps et avant le formage à froid du filetage intérieur (7).

7. Procédé de fabrication selon la revendication 6, dans lequel le traitement thermique (S3) comprend le chauffage de l'ébauche (22) à une température T dans la plage de 350°C≤T≤380°C.

8. Procédé de fabrication selon la revendication 7, dans lequel le chauffage de l'ébauche (22) est effectué à une température T constante.

9. Procédé de fabrication selon la revendication 7 ou 8, dans lequel le chauffage de l'ébauche (22) est effectué pour une période t dans la plage de 1h≤t≤3h.

10. Procédé de fabrication selon l'une des revendications 6 à 9, dans lequel l'étape de formage à froid (26) comprend un fluage sans retrait de matériau d'une surface intérieure de la section d'association (5).
